# EUROPÄISCHE PATENTSCHRIFT

(11) **EP 4 022 261 B1**
(45) Veröffentlichungstag und Bekanntmachung des Hinweises auf die Patenterteilung: **10.04.2024**
(21) Anmeldenummer: 20754188.9
(22) Anmeldetag: 03.08.2020
(51) Int. Cl.: G01F 25/10, G01F 1/84

(54) **CORIOLIS-MESSAUFNEHMER UND CORIOLIS-MESSGERÄT**
CORIOLIS MEASURING SENSOR, AND CORIOLIS MEASURING DEVICE
CAPTEUR DE MESURE À EFFET CORIOLIS ET APPAREIL DE MESURE À EFFET CORIOLIS

(30) Priorität: 30.08.2019 DE 102019123344
(43) Veröffentlichungstag der Anmeldung: 06.07.2022
(73) Patentinhaber: Endress+Hauser Flowtec AG, 4153 Reinach (BL) (CH)
(72) Erfinder: RAMSEYER, Severin, 4142 Münchenstein (CH); SCHWENTER, Benjamin, 4226 Breitenbach (CH); POHL, Johan, 79110 Freiburg (DE)
(74) Vertreter: Hahn, Christian
(86) Internationale Anmeldenummer: PCT/EP2020/071815
(87) Internationale Veröffentlichungsnummer: WO 2021/037490

(56) Entgegenhaltungen:
- WO-A1-2005/073676
- WO-A1-2019/110353
- DE-A1-102015 002 893
- US-A- 4 192 184
- US-A- 4 895 030
- US-A- 5 295 084
- US-A- 5 349 872

## Beschreibung

Die Erfindung betrifft einen Coriolis-Messaufnehmer zum Messen einer Dichte oder eines Massedurchflusses eines durch eine Rohrleitung strömenden Mediums und ein Coriolis-Messgerät mit einem solchen Coriolis-Messaufnehmer.

Solche Coriolis-Messaufnehmer bzw. Coriolis-Messgeräte sind bereits bekannt, wie in der DE102015120087A1 oder in WO 2019/110353 A1 gezeigt und umfassen üblicherweise ein oder mehrere Messrohre, welche im Betrieb mit einer Rohrleitung in Verbindung stehen und ein durch die Rohrleitung fließendes Medium führen. Schwingungserreger versetzen die Messrohre in Schwingung, und Schwingungssensoren erfassen die Messrohrschwingungen, wobei aus den Messrohrschwingungen unter Ausnutzung des Corioliseffekts Rückschlüsse auf Medieneigenschaften wie Dichte oder Massedurchfluss möglich sind.

Schwingungserreger und Schwingungssensoren umfassen üblicherweise jeweils mindestens einen Permanentmagnet und jeweils mindestens eine Spule, wobei Messrohrschwingungen zu einer Relativbewegung der Permanentmagnete zu zugehörigen Spulen führen. Die Messrohrschwingungen werden bei Erregern durch Beaufschlagen einer Erregerspule mit einem Anregestrom ausgelöst, wobei ein dabei erzeugtes Magnetfeld eine Kraft auf den zugehörigen Permanentmagnet auslöst. Umgekehrt führen Messrohrschwingungen zu einer Induktion von elektrischen Spannungen, welche als Messspannungen ausgewertet werden.

Das gegenseitige Wechselwirken zwischen einem Permanentmagnet und einer zugehörigen Spule wird stark durch einen Zustand des Permanentmagnets beeinflusst. Alterungseffekte führen zum Abbau eines intrinsischen Magnetfelds des Permanentmagnets. Bei Nichtberücksichtigung oder Unkenntnis solcher Effekte können Messwerte von Medieneigenschaften verfälscht werden. Ein Verfahren zum Kompensieren einer Alterung eines Schwingungerregers ist offanbart in DE 10 2015 002893 A1, wobei das Verfahren die folgende Schritte umfasst: Messen der Schwingungsamplitude des Messrohrs bei Kalibration mittels des Amplitudensensors mittels des Messstroms und der Messspannung; Messen einer induzierten Spannung in einer Erregerspule / Sensorspule bei Kalibration; Messen der Schwingungsamplitude des Messrohrs zu einem aktuellen Zeitpunkt mittels des Amplitudensensors mittels des Messstroms und der Messspannung; Messen einer induzierten Spannung in einer Erregerspule / Sensorspule zu einem aktuellen Zeitpunkt; Bestimmen eines Alterungszustands eines Permanentmagnets eines Schwingungserregers / Schwingungssensors zumindest mittels der während der vorherigen Verfahrensschritte erfassten Messgrößen.

Aufgabe der Erfindung ist es daher, einen Coriolis-Messaufnehmer und ein Coriolis-Messgerät vorzuschlagen, bei welchem Alterungseffekte von Permanentmagneten erkennbar und kompensierbar sind.

Die Aufgabe wird gelöst durch einen Coriolis-Messaufnehmer gemäß dem unabhängigen Anspruch 1 sowie durch ein Coriolis-Messgerät gemäß dem unabhängigen Anspruch 6.

Ein erfindungsgemäßer Coriolis-Messaufnehmer eines Coriolis-Messgeräts zum Messen einer Dichte oder eines Massedurchflusses eines durch eine Rohrleitung strömenden Mediums umfasst: mindestens ein Messrohr zum Führen des Mediums;
einen Trägerkörper zum Tragen des mindestens einen Messrohrs;
mindestens einen Schwingungserreger zum Erzeugen von Messrohrschwingungen;
mindestens zwei Schwingungssensoren zum Erfassen von Messrohrschwingungen,
wobei die Schwingungssensoren jeweils zumindest einen Permanentmagnet und jeweils zumindest eine Sensorspule aufweisen,
und wobei der Schwingungserreger jeweils zumindest einen Permanentmagnet und jeweils zumindest eine Erregerspule aufweisen
wobei
der Coriolis-Messaufnehmer einen Amplitudensensor eingerichtet zum Erfassen einer Schwingungsamplitude der Messrohrschwingungen aufweist,
wobei der der Amplitudensensor eine erste Spule und eine zweite Spule aufweist, welche magnetisch gekoppelt, und insbesondere koaxial zueinander ausgerichtet sind,
wobei die Spulen dazu eingerichtet sind, durch Messrohrschwingungen relativ zueinander, insbesondere entlang ihrer Spulenachsen bewegt zu werden,
wobei die erste Spule dazu eingerichtet ist, mit einem Messstrom, insbesondere einem Gleichstrom beaufschlagt zu werden und ein Magnetfeld zu erzeugen,
wobei die zweite Spule dazu eingerichtet ist, das Magnetfeld zu erfassen und eine induzierte Messspannung zu erzeugen.

Auf diese Weise kann eine Amplitude des Messrohrs ohne einen alterungsanfälligen Permanentmagnet gemessen werden und somit Schwingungssensor und/oder Schwingungserreger während des Betriebs kalibriert bzw. eine alterungsbedingte Beeinträchtigung des Schwingungssensors bzw. Schwingungserregers während des Betriebs kompensiert werden.

Die erste Spule kann dabei mit einem Gleichstrom oder mit einem Wechselstrom beaufschlagt werden, wobei eine Frequenz eines solchen Wechselstroms nicht mit Schwingungsfrequenzen des Messrohrs oder Obertönen der Schwingungsfrequenzen übereinstimmen sollte, um eine unerwünschte insbesondere gegenseitige Beeinflussung zu vermeiden.

Eine Beaufschlagung der ersten Spule mit einem Wechselstrom, insbesondere mit einer Frequenz größer als die Schwingungsfrequenz des Messrohrs kann hinsichtlich der Signalverarbeitung Vorteile aufweisen. Jedoch kann ein elektromagnetisches Wechselfeld aufgrund von Abstrahlung auch unerwünscht sein. Der Fachmann kann solcherlei Aspekte bei seinen Überlegungen berücksichtigen und entsprechend die erste Spule mit einem Messstrom beaufschlagen.

In einer Ausgestaltung weist die erste Spule bzgl. des Trägerkörpers eine feste Position auf, und wobei die zweite Spule dazu eingerichtet ist, der Schwingungsbewegung des Messrohrs zu folgen.

Auf diese Weise kann vermieden werden, dass die mit einem Messstrom beaufschlagte Spule aufgrund einer Eigenbewegung eine nichtstatische Magnetfeldkomponente erzeugt.

In einer Ausgestaltung ist der Amplitudensensor dazu eingerichtet, die Schwingungsamplitude des Messrohrs in einem Bereich mit maximaler Amplitude zu erfassen.

In einer Ausgestaltung ist die erste Spule eine Helmholtzspule, wobei die zweite Spule insbesondere dazu eingerichtet ist, durch die Messrohrschwingungen zumindest teilweise in die erste Spule bewegt zu werden.

In einer Ausgestaltung ist eine Schwingungsamplitude des Messrohrs mittels des Messstroms sowie der induzierten Messspannung berechenbar.

Die in der zweiten Spule induzierte Messspannung ermöglicht einen Rückschluss auf eine Messrohrgeschwindigkeit, und der Messstrom ist ein Maß für die Stärke des in der ersten Spule erzeugten Magnetfelds. Mit Hilfe weiterer Größen wie beispielsweise der Induktivitäten der Spulen lässt sich die Schwingungsamplitude berechnen.

In einer Ausgestaltung weist der Coriolis-Messaufnehmer zumindest ein Messrohrpaar auf, wobei die Messrohre des Messrohrpaars dazu eingerichtet sind gegeneinander zu schwingen,wobei der Schwingungserreger zwei Erregerspulen aufweist, welche Erregerspulen jeweils an einem Messrohr des Messrohrpaars angeordnet sind, wobei der Permanentmagnet des Schwingungserregers an einem Messrohr angeordnet ist,
und/oder wobei
wobei die Schwingungssensoren jeweils zwei Sensorspulen aufweisen, welche Sensorspulen jeweils an einem Messrohr des Messrohrpaars angeordnet sind, wobei der Permanentmagnet des Schwingungserregers an einem Messrohr angeordnet ist, wobei die Erregerspulen und/oder die Sensorspulen eines jeweiligen Schwingungssensors jeweils eine erste Spule und eine zweite Spule des Amplitudensensors ausbilden.

Ein erfindungsgemäßes Coriolis-Messgerät zum Messen einer Dichte bzw. eines Massedurchflusses eines durch eine Rohrleitung strömenden Mediums umfasst:
einen erfindungsgemäßen Coriolis-Messaufnehmer,
eine elektronische Mess-/Betriebsschaltung eingerichtet zum Betreiben des Schwingungserregers und des Amplitudensensors sowie eingerichtet zum Bereitstellen von Messwerten der Dichte und/oder des Massedurchflusses auf Basis der durch die Schwingungssensoren erfassten Messrohrschwingungen,
ein Elektronikgehäuse, in welchem die elektronische Mess-/Betriebsschaltung angeordnet ist,
wobei die elektronische Mess-/Betriebsschaltung dazu eingerichtet ist, mittels des Amplitudensensors und mindestens eines Schwingungssensors eine Alterung des Permanentmagnets des Schwingungssensors zu bestimmen und insbesondere zu kompensieren,
   und/oder
mittels des Amplitudensensors und mindestens eines Schwingungserregers eine Alterung des Permanentmagnets des Schwingungserregers zu bestimmen und insbesondere zu kompensieren.

In einer Ausgestaltung ist die elektronische Mess-/Betriebsschaltung dazu eingerichtet, die Schwingungsamplitude des Messrohrs mittels des Messstroms und der Messspannung zu bestimmen.

In einer Ausgestaltung ist die elektronische Mess-/Betriebsschaltung dazu eingerichtet, die Alterung des Permanentmagnets des Schwingungssensors mittels zumindest der folgenden Messgrößen zu kompensieren:
gemessene Schwingungsamplitude des Messrohrs bei Kalibration;
induzierte Spannung in der Sensorspule bei Kalibration;
gemessene Schwingungsamplitude des Messrohrs zu einem aktuellen Zeitpunkt;
induzierte Spannung in der Sensorspule zu einem aktuellen Zeitpunkt;
und/oder wobei
wobei die elektronische Mess-/Betriebsschaltung dazu eingerichtet ist, die Alterung des Permanentmagnets des Schwingungserregers mittels zumindest der folgenden Messgrößen zu kompensieren:
   gemessene Schwingungsamplitude des Messrohrs bei Kalibration;
   induzierte Spannung in der Erregerspule bei Kalibration;
   gemessene Schwingungsamplitude des Messrohrs zu einem aktuellen Zeitpunkt;
   induzierte Spannung in der Erregerspule zu einem aktuellen Zeitpunkt.

Bei einem erfindungsgemäßen Verfahren zum Kompensieren einer Alterung eines Schwingungserregers / Schwingungssensors eines erfindungsgemäßen Coriolis-Messgeräts bestimmt mindestens ein Amplitudensensor eine Schwingungsamplitude mindestens eines Messrohrs, wobei der Amplitudensensor eine erste Spule und eine zweite Spule aufweist, welche magnetisch gekoppelt, und insbesondere koaxial zueinander ausgerichtet sind, wobei die Spulen dazu eingerichtet sind, durch Messrohrschwingungen relativ zueinander, insbesondere entlang ihrer Spulenachsen bewegt zu werden,
wobei die erste Spule dazu eingerichtet ist, mit einem Messstrom, insbesondere einem Gleichstrom beaufschlagt zu werden und ein Magnetfeld zu erzeugen, wobei die zweite Spule dazu eingerichtet ist, das Magnetfeld zu erfassen und eine induzierte Messspannung zu erzeugen,
wobei das Verfahren folgende Schritte umfasst:
   Messen der Schwingungsamplitude des Messrohrs bei Kalibration mittels eines Amplitudensensors mittels des Messstroms und der Messspannung;
   Messen einer induzierten Spannung in einer Erregerspule / Sensorspule bei Kalibration;
   Messen der Schwingungsamplitude des Messrohrs zu einem aktuellen Zeitpunkt mittels eines Amplitudensensors mittels des Messstroms und der Messspannung;
   Messen einer induzierten Spannung in einer Erregerspule / Sensorspule zu einem aktuellen Zeitpunkt;
   Bestimmen eines Alterungszustands eines Permanentmagnets eines Schwingungserregers / Schwingungssensors zumindest mittels der während der vorherigen Verfahrensschritte erfassten Messgrößen.

Im Folgenden wird die Erfindung anhand von in den Zeichnungen dargestellten Ausführungsbeispielen beschrieben. Es zeigt:
Fig. 1 ein beispielhaftes erfindungsgemäßes Coriolis-Messgerät;
Fig. 2 a) eine schematische Skizze eines Ausführungsbeispiels eines Schwingungserregers bzw. einer Schwingungssensoranordnung an zwei Messrohren; und

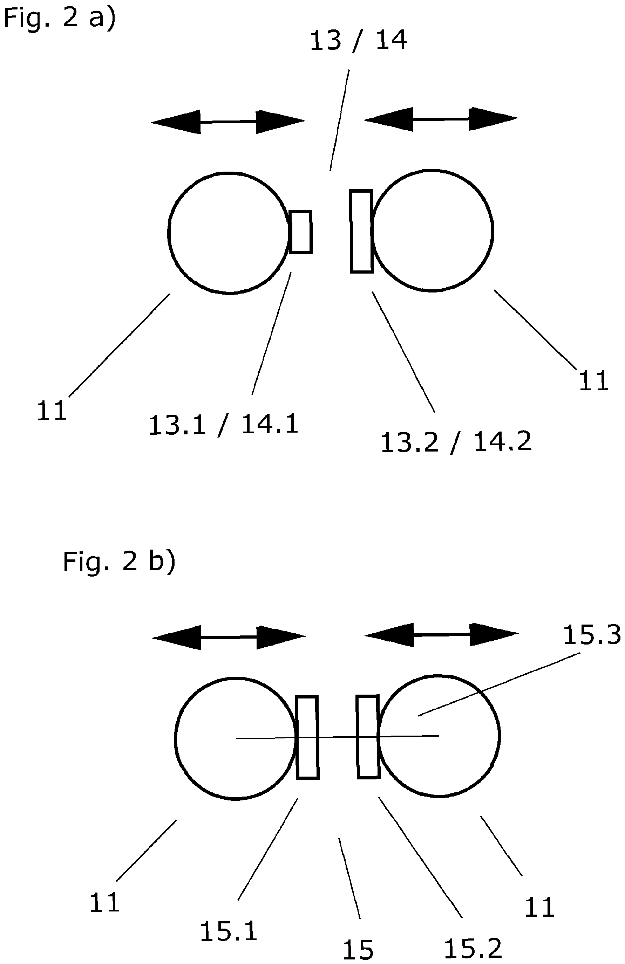

Fig. 2 b) eine schematische Skizze eines Ausführungsbeispiels einer Amplitudensensoranordnung an zwei Messrohren.

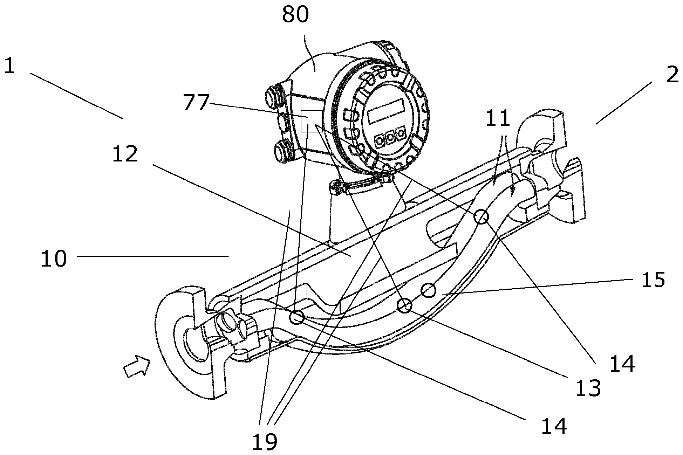

Fig. 1 skizziert den Aufbau eines beispielhaften erfindungsgemäßen Coriolis-Messgeräts 10 mit einem beispielhaften erfindungsgemäßen Coriolis-Messaufnehmer, wobei der Coriolis-Messaufnehmer ein Schwingungssystem mit zwei Messrohren 11 mit jeweils einem Einlauf und einem Auslauf, einen Trägerkörper 12 zum Tragen der Messrohre, einen Schwingungserreger 13, zwei Schwingungssensoren 14 und einen erfindungsgemäßen Amplitudensensor 15 aufweist. Der Erreger ist dazu eingerichtet, die beiden Messrohre senkrecht zu einer jeweils durch die bogenförmig ausgestalteten Messrohre definierten Messrohrlängsebene zum Schwingen anzuregen. Die Sensoren sind dazu eingerichtet, die den Messrohren aufgeprägte Schwingung zu erfassen. Temperatursensoren 17 sind dazu eingerichtet, Temperaturen des Trägerkörpers, der Messrohre (beeinflusst durch eine Medientemperatur), sowie des Trägerkörpers zu erfassen. Auch die Sensoren und der Erreger können mit solchen Temperatursensoren ausgestattet sein. Der Coriolis-Messaufnehmer ist mit einem Elektronikgehäuse 80 des Coriolis-Messgeräts verbunden, welches dazu eingerichtet ist, eine elektronische Mess-/Betriebsschaltung 77 zu behausen, welche Mess-/Betriebsschaltung dazu eingerichtet ist, den Schwingungserreger sowie die Schwingungssensoren sowie den Amplitudensensor 15 zu betrieben und auf Basis von mittels der Sensoren gemessenen Schwingungseigenschaften des Messrohrs Durchflussmesswerte und/oder Dichtemesswerte zu ermitteln und bereitzustellen. Der Erreger sowie die Sensoren sind mittels elektrischer Verbindungen 19 mit der elektronischen Mess-/Betriebsschaltung verbunden. Die elektrischen Verbindungen 19 können jeweils durch Kabelführungen zusammengefasst sein.

Bei Betrieb eines solchen Coriolis-Messgeräts sind einige Effekte zu berücksichtigen. So beeinflusst eine Erregereffizienz eine Schwingungsamplitude des Messrohrs, und eine Sensitivität der Sensoren eine Fähigkeit, eine Schwingung des Messrohrs in eine Messgröße umzusetzen, wie beispielsweise eine Messspannung oder einen Messstrom. Häufig wird ein Coriolis-Messgerät vor Inbetriebnahme beispielsweise bei einem Kunden eines Herstellers von Coriolis-Messgeräten unter Standardbedingungen kalibriert und somit unter anderem ein Zusammenhang zwischen einer Erregung von Messrohrschwingungen durch den Erreger und eine Erfassung der Messrohrschwingungen durch die Sensoren dokumentiert. Die Erregereffizienz sowie auch die Sensorsensitivität unterliegen dabei Einflüssen, welche einerseits reversible Änderungen aber auch nichtreversible Änderungen dieser Größen hervorrufen können.

Ein Beispiel eines reversiblen Einflusses ist eine Erhöhung eines ohmschen Widerstands einer Spulenvorrichtung eines Sensors durch eine Temperaturerhöhung der Spulenvorrichtung, was eine verringerte Induktion einer elektrischen Spannung durch einen relativ zur Spulenvorrichtung bewegten Sensormagnet zur Folge hat. Ein Beispiel einer nichtreversiblen Änderung ist eine Alterung des Sensormagnets beispielsweise durch starke Erwärmung.

Der Amplitudensensor 15 mit einer ersten Spule 15.1 und einer zweiten Spule 15.2, siehe Fig. 2 ist dazu eingerichtet, die Schwingungsamplitude des Messrohrs zu messen, wobei die erste Spule dazu eingerichtet ist, mit einem Messstrom, insbesondere einem Gleichstrom beaufschlagt zu werden und ein Magnetfeld zu erzeugen, wobei die zweite Spule dazu eingerichtet ist, das Magnetfeld zu erfassen und eine induzierte Messspannung zu erzeugen.

Durch Anordnen der Spulen dergestalt, dass durch die Messrohrschwingungen die Spulen relativ zueinander bewegt werden, kann mittels des Messstroms sowie der Messspannung und einer Schwingungsfrequenz der Messrohre eine Schwingungsamplitude berechnet werden.

Bei dem hier dargestellten Coriolis-Messgerät können die erste Spule und die zweite Spule jeweils an einem Messrohr angeordnet sein, so dass sie zwecks guter magnetischer Kopplung insbesondere koaxial zueinander ausgerichtet sind und durch Messrohrschwingungen relativ zueinander, insbesondere entlang ihrer Spulenachsen 15.3 bewegt werden.

Alternativ kann auch nur eine der Spulen an einem Messrohr befestigt werden, und die andere Spule am Trägerkörper fixiert werden, wobei auch in diesem Fall sie insbesondere koaxial zueinander ausgerichtet sind und durch Messrohrschwingungen relativ zueinander, insbesondere entlang ihrer Spulenachsen 15.3 bewegt werden.

Die elektronische Mess-/Betriebsschaltung 77 ist dazu eingerichtet, die Alterung des Permanentmagnets 14.1 des Schwingungssensors mittels zumindest der folgenden Messgrößen zu kompensieren:
gemessene Schwingungsamplitude des Messrohrs bei Kalibration;
induzierte Spannung in der Sensorspule bei Kalibration;
gemessene Schwingungsamplitude des Messrohrs zu einem aktuellen Zeitpunkt;
induzierte Spannung in der Sensorspule zu einem aktuellen Zeitpunkt;
und/oder wobei
die elektronische Mess-/Betriebsschaltung 77 dazu eingerichtet ist, die Alterung des Permanentmagnets 13.1 des Schwingungserregers 13 mittels zumindest der folgenden Messgrößen zu kompensieren:
   gemessene Schwingungsamplitude des Messrohrs 11 bei Kalibration;
   induzierte Spannung in der Erregerspule bei Kalibration;
   gemessene Schwingungsamplitude des Messrohrs zu einem aktuellen Zeitpunkt;
   induzierte Spannung in der Erregerspule zu einem aktuellen Zeitpunkt.

Auf diese Weise kann eine Amplitude des Messrohrs ohne einen alterungsanfälligen Permanentmagnet gemessen werden und somit Schwingungssensor und/oder Schwingungserreger während des Betriebs kalibriert bzw. eine alterungsbedingte Beeinträchtigung des Schwingungssensors bzw. Schwingungserregers während des Betriebs kompensiert werden.

Die erste Spule kann dabei mit einem Gleichstrom oder mit einem Wechselstrom beaufschlagt werden, wobei eine Frequenz eines solchen Wechselstroms nicht mit Schwingungsfrequenzen des Messrohrs oder Obertönen der Schwingungsfrequenzen übereinstimmen sollte, um eine unerwünschte insbesondere gegenseitige Beeinflussung zu vermeiden.

Eine Beaufschlagung der ersten Spule mit einem Wechselstrom, insbesondere mit einer Frequenz größer als die Schwingungsfrequenz des Messrohrs kann hinsichtlich der Signalverarbeitung Vorteile aufweisen. Jedoch kann ein elektromagnetisches Wechselfeld aufgrund von Abstrahlung auch unerwünscht sein. Der Fachmann kann solcherlei Aspekte bei seinen Überlegungen berücksichtigen und entsprechend die erste Spule mit einem Messstrom beaufschlagen.

Ein erfindungsgemäßes Coriolis-Messgerät ist nicht auf das Vorhandensein zweier Messrohre beschränkt. So kann die Erfindung bei einem Coriolis-Messgerät mit beliebig vielen Messrohren, beispielsweise auch bei einem Einrohr- oder Vierrohr-Messgerät umgesetzt werden.

Anders als hier gezeigt, können die Messrohre auch gerade ausgestaltet sein und beispielsweise dazu eingerichtet sein laterale oder torsionale Schwingungen durchzuführen.

Fig. 2 a) zeigt eine beispielhafte schematische Anordnung eines Schwingungserregers 13 bzw. Schwingungssensors 14 an zwei Messrohren eines Coriolis-Messaufnehmers, wobei ein Permanentmagnet 13.1, 14.1 an einem Messrohr und eine Sensorspule 14.2 bzw. Erregerspule 13.2 am jeweils anderen Messrohr angeordnet ist. Die Messrohr sind dabei dazu eingerichtet, gegeneinander zu schwingen, wobei bei einem Schwingungssensor aufgrund der Relativbewegung zwischen Permanentmagnet und Sensorspule eine Induktion einer elektrischen Spannung in der Spule stattfindet, welche als Messspannung zwecks Bestimmung von Medieneigenschaften herangezogen werden kann. Bei einem Schwingungserreger kann ein Beaufschlagen der Erregerspule mit einem elektrischen Strom zum Ausüben einer Kraft auf den entsprechenden Permanentmagnet zwecks Erzeugung einer Messrohrschwingung genutzt werden. Die Effizienz der Erzeugung einer Messrohrschwingung bzw. deren Erfassung mittels der Induktion einer Spannung in der Sensorspule ist unter anderem von Alterungszuständen der Permanentmagnete abhängig.

Um diese Alterungszustände erfassen zu können, ist ein erfindungsgemäßer Amplitudensensor mit einer ersten Spule 15.1 und einer zweiten Spule 15.2 eingerichtet, siehe Fig. 2b), bei dem wie hier gezeigt, jeweils eine Spule an einem Messrohr angeordnet sein kann. Durch Beaufschlagung der ersten Spule mit einem Messstrom, insbesondere einem Gleichstrom, um ein Magnetfeld zu erzeugen, und Erfassen des Magnetfelds mit der zweiten Spule kann eine Messrohrschwingungsamplitude bestimmt werden.

Um Alterungseffekte beim Schwingungssensor zu kompensieren, können folgende Messgrößen berücksichtigt werden:
gemessene Schwingungsamplitude des Messrohrs bei Kalibration;
induzierte Spannung in der Sensorspule bei Kalibration;
gemessene Schwingungsamplitude des Messrohrs zu einem aktuellen Zeitpunkt;
induzierte Spannung in der Sensorspule zu einem aktuellen Zeitpunkt.

Um Alterungseffekte beim Schwingungserreger zu kompensieren, können folgende Messgrößen berücksichtigt werden:
gemessene Schwingungsamplitude des Messrohrs bei Kalibration;
induzierte Spannung in der Erregerspule bei Kalibration;
gemessene Schwingungsamplitude des Messrohrs zu einem aktuellen Zeitpunkt;
induzierte Spannung in der Erregerspule zu einem aktuellen Zeitpunkt.

Um von einer Schwingungsamplitude am Ort des Amplitudensensors auf eine Schwingungsamplitude am Ort eines Schwingungserregers bzw. Schwingungssensors rückzuschließen, können weitere Messgrößen zur Kompensation berücksichtigt werden, wie beispielsweise Mediendruck, Medientemperatur, Mediendichte, Messrohrsteifigkeit.

### Bezugszeichenliste

- 1: Coriolis-Messgerät
- 10: Coriolis-Messaufnehmer
- 11: Messrohr
- 12: Trägerkörper
- 13: Schwingungserreger
- 13.1: Permanentmagnet
- 13.2: Erregerspule
- 14: Schwingungssensoren
- 14.1: Permanentmagnet
- 14.2: Sensorspule
- 15: Amplitudensensor
- 15.1: erste Spule
- 15.2: zweite Spule
- 15.3: Spulenachse
- 77: elektronische Mess-/Betriebsschaltung
- 80: Elektronikgehäuse

## Patentansprüche

1. Coriolis-Messaufnehmer (10) eines Coriolis-Messgeräts (1) zum Messen einer Dichte oder eines Massedurchflusses eines durch eine Rohrleitung strömenden Mediums umfassend:
mindestens ein Messrohr (11) zum Führen des Mediums;
einen Trägerkörper (12) zum Tragen des mindestens einen Messrohrs;
mindestens einen Schwingungserreger (13) zum Erzeugen von Messrohrschwingungen;
mindestens zwei Schwingungssensoren (14) zum Erfassen von Messrohrschwingungen,
wobei die Schwingungssensoren jeweils zumindest einen Permanentmagnet (14.1) und jeweils zumindest eine Sensorspule (14.2) aufweisen,
und wobei der Schwingungserreger jeweils zumindest einen Permanentmagnet (13.1) und jeweils zumindest eine Erregerspule (13.2) aufweisen
wobei
der Coriolis-Messaufnehmer zumindest einen Amplitudensensor (15) eingerichtet zum Erfassen einer Schwingungsamplitude der Messrohrschwingungen aufweist,
**dadurch gekennzeichnet, dass** der Amplitudensensor eine erste Spule (15.1) und eine zweite Spule (15.2) aufweist, welche magnetisch gekoppelt, und insbesondere koaxial zueinander ausgerichtet sind,
wobei die Spulen dazu eingerichtet sind, durch Messrohrschwingungen relativ zueinander, insbesondere entlang ihrer Spulenachsen (15.3) bewegt zu werden,
wobei die erste Spule dazu eingerichtet ist, mit einem Messstrom, insbesondere einem Gleichstrom beaufschlagt zu werden und ein Magnetfeld zu erzeugen,
wobei die zweite Spule dazu eingerichtet ist, das Magnetfeld zu erfassen und eine induzierte Messspannung zu erzeugen.

2. Coriolis-Messaufnehmer nach Anspruch 1,
wobei die erste Spule (15.1) bzgl. des Trägerkörpers (12) eine feste Position aufweist, und wobei die zweite Spule (15.2) dazu eingerichtet ist, der Schwingungsbewegung des Messrohrs (11) zu folgen.

3. Coriolis-Messaufnehmer nach Anspruch 1 oder 2,
wobei der Amplitudensensor (15) dazu eingerichtet ist, die Schwingungsamplitude des Messrohrs in einem Bereich mit maximaler Amplitude zu erfassen.

4. Coriolis-Messaufnehmer nach einem der vorigen Ansprüche,
wobei die erste Spule (15.1) eine Helmholtzspule ist, wobei die zweite Spule (15.2) insbesondere dazu eingerichtet ist, durch die Messrohrschwingungen zumindest teilweise in die erste Spule bewegt zu werden.

5. Coriolis-Messaufnehmer nach einem der vorigen Ansprüche,
wobei eine Schwingungsamplitude des Messrohrs (11) mittels des Messstroms sowie der induzierten Messspannung berechenbar ist.

6. Coriolis-Messaufnehmer nach einem der vorigen Ansprüche,
wobei der Coriolis-Messaufnehmer zumindest ein Messrohrpaar aufweist, wobei die Messrohre des Messrohrpaars dazu eingerichtet sind gegeneinander zu schwingen,
wobei der Schwingungserreger (13) zwei Erregerspulen (13.2) aufweist, welche Erregerspulen jeweils an einem Messrohr des Messrohrpaars angeordnet sind, wobei der Permanentmagnet des Schwingungserregers an einem Messrohr angeordnet ist,
und/oder wobei
wobei die Schwingungssensoren (14) jeweils zwei Sensorspulen (14.2) aufweisen, welche Sensorspulen jeweils an einem Messrohr des Messrohrpaars angeordnet sind, wobei der Permanentmagnet des Schwingungserregers an einem Messrohr angeordnet ist,
wobei die Erregerspulen und/oder die Sensorspulen eines jeweiligen Schwingungssensors jeweils eine erste Spule (15.1) und eine zweite Spule (15.2) des Amplitudensensors ausbilden.

7. Coriolis-Messgerät (1) zum Messen einer Dichte bzw. eines Massedurchflusses eines durch eine Rohrleitung strömenden Mediums umfassend:
einen Coriolis-Messaufnehmer (10) nach einem der vorigen Ansprüche,
eine elektronische Mess-/Betriebsschaltung (77) eingerichtet zum Betreiben des Schwingungserregers (13) und des Amplitudensensors (15) sowie eingerichtet zum Bereitstellen von Messwerten der Dichte und/oder des Massedurchflusses auf Basis der durch die Schwingungssensoren erfassten Messrohrschwingungen,
ein Elektronikgehäuse (80), in welchem die elektronische Mess-/Betriebsschaltung angeordnet ist,
**dadurch gekennzeichnet, dass**
die elektronische Mess-/Betriebsschaltung dazu eingerichtet ist, mittels des Amplitudensensors (15) und mindestens eines Schwingungssensors (14) eine Alterung des Permanentmagnets (14.1) des Schwingungssensors zu bestimmen und insbesondere zu kompensieren,
und/oder
mittels des Amplitudensensors (15) und mindestens eines Schwingungserregers (13) eine Alterung des Permanentmagnets (13.1) des Schwingungserregers zu bestimmen und insbesondere zu kompensieren.

8. Coriolis-Messgerät nach Anspruch 7,
wobei die elektronische Mess-/Betriebsschaltung (77) dazu eingerichtet ist, die Schwingungsamplitude des Messrohrs (11) mittels des Messstroms und der Messspannung zu bestimmen.

9. Coriolis-Messgerät nach Anspruch 7 oder 8,
wobei die elektronische Mess-/Betriebsschaltung (77) dazu eingerichtet ist, die Alterung des Permanentmagnets (14.1) des Schwingungssensors mittels zumindest der folgenden Messgrößen zu kompensieren:
gemessene Schwingungsamplitude des Messrohrs bei Kalibration;
induzierte Spannung in der Sensorspule bei Kalibration;
gemessene Schwingungsamplitude des Messrohrs zu einem aktuellen Zeitpunkt;
induzierte Spannung in der Sensorspule zu einem aktuellen Zeitpunkt;
und/oder wobei
die elektronische Mess-/Betriebsschaltung (77) dazu eingerichtet ist, die Alterung des Permanentmagnets (13.1) des Schwingungserregers (13) mittels zumindest der folgenden Messgrößen zu kompensieren:
gemessene Schwingungsamplitude des Messrohrs (11) bei Kalibration;
induzierte Spannung in der Erregerspule bei Kalibration;
gemessene Schwingungsamplitude des Messrohrs zu einem aktuellen Zeitpunkt;
induzierte Spannung in der Erregerspule zu einem aktuellen Zeitpunkt.

10. Verfahren zum Kompensieren einer Alterung eines Schwingungserregers / Schwingungssensors eines Coriolis-Messgeräts nach einem der Ansprüche 7 bis 9,
wobei mindestens ein Amplitudensensor eine Schwingungsamplitude mindestens eines Messrohrs bestimmt, wobei der Amplitudensensor eine erste Spule (15.1) und eine zweite Spule (15.2) aufweist, welche magnetisch gekoppelt, und insbesondere koaxial zueinander ausgerichtet sind, wobei die Spulen dazu eingerichtet sind, durch Messrohrschwingungen relativ zueinander, insbesondere entlang ihrer Spulenachsen (15.3) bewegt zu werden,
wobei die erste Spule dazu eingerichtet ist, mit einem Messstrom, insbesondere einem Gleichstrom beaufschlagt zu werden und ein Magnetfeld zu erzeugen, wobei die zweite Spule dazu eingerichtet ist, das Magnetfeld zu erfassen und eine induzierte Messspannung zu erzeugen,
wobei das Verfahren folgende Schritte umfasst:
Messen der Schwingungsamplitude des Messrohrs bei Kalibration mittels eines Amplitudensensors mittels des Messstroms und der Messspannung;
Messen einer induzierten Spannung in einer Erregerspule / Sensorspule bei Kalibration;
Messen der Schwingungsamplitude des Messrohrs zu einem aktuellen Zeitpunkt mittels des Amplitudensensors mittels des Messstroms und der Messspannung;
Messen einer induzierten Spannung in einer Erregerspule / Sensorspule zu einem aktuellen Zeitpunkt;
Bestimmen eines Alterungszustands eines Permanentmagnets eines Schwingungserregers / Schwingungssensors zumindest mittels der während der vorherigen Verfahrensschritte erfassten Messgrößen.

## Claims

1. Coriolis measuring sensor (10) of a Coriolis measuring device (1) for measuring a density or a mass flow rate of a medium flowing through a pipeline:
at least one measuring tube (11) for guiding the medium;
a carrier body (12) for carrying the at least one measuring tube;
at least one vibration exciter (13) for generating measuring tube vibrations; at least two vibration sensors (14) for detecting measuring tube vibrations,
wherein the vibration sensors each have at least one permanent magnet (14.1) and at least one sensor coil (14.2),
and wherein the vibration exciter has in each case at least one permanent magnet (13.1) and in each case at least one excitation coil (13.2)
wherein
the Coriolis measuring sensor has at least one amplitude sensor (15) configured to detect an oscillation amplitude of the measuring tube oscillations,
**characterised in that** the amplitude sensor has a first coil (15.1) and a second coil (15.2), which are magnetically coupled and in particular aligned coaxially to one another,
wherein the coils are configured to be moved relative to each other, in particular along their coil axes (15.3), by measuring tube oscillations,
wherein the first coil is configured to be energised with a measuring current, in particular a direct current, and to generate a magnetic field,
wherein the second coil is configured to detect the magnetic field and generate an induced measurement voltage.

2. Coriolis sensor according to claim 1,
wherein the first coil (15.1) has a fixed position with respect to the carrier body (12), and wherein the second coil (15.2) is arranged to follow the oscillating movement of the measuring tube (11).

3. Coriolis sensor according to claim 1 or 2,
wherein the amplitude sensor (15) is configured to detect the vibration amplitude of the measuring tube in a range with maximum amplitude.

4. Coriolis sensor according to one of the preceding claims,
wherein the first coil (15.1) is a Helmholtz coil, wherein the second coil (15.2) is arranged in particular to be moved at least partially into the first coil by the measuring tube vibrations.

5. Coriolis sensor according to one of the preceding claims,
wherein an oscillation amplitude of the measuring tube (11) can be calculated by means of the measuring current and the induced measuring voltage.

6. Coriolis sensor according to one of the preceding claims,
wherein the Coriolis measuring sensor has at least one pair of measuring tubes, the measuring tubes of the pair of measuring tubes being configured to oscillate against each other,
wherein the vibration exciter (13) has two excitation coils (13.2), which excitation coils are each arranged on a measuring tube of the pair of measuring tubes, wherein the permanent magnet of the vibration exciter is arranged on a measuring tube,
and/or wherein
wherein the vibration sensors (14) each have two sensor coils (14.2), which sensor coils are each arranged on a measuring tube of the pair of measuring tubes, wherein the permanent magnet of the vibration exciter is arranged on a measuring tube,
wherein the excitation coils and/or the sensor coils of a respective vibration sensor each form a first coil (15.1) and a second coil (15.2) of the amplitude sensor.

7. Coriolis measuring device (1) for measuring a density or a mass flow rate of a medium flowing through a pipeline:
a Coriolis measuring sensor (10) according to one of the preceding claims,
an electronic measuring/operating circuit (77) arranged to operate the vibration exciter (13) and the amplitude sensor (15) and arranged to provide measured values of the density and/or the mass flow rate on the basis of the measuring tube vibrations detected by the vibration sensors, an electronics housing (80) in which the electronic measuring/operating circuit is arranged,
**characterised in that**
the electronic measuring/operating circuit is configured to measure the amplitude of the (15) and at least one vibration sensor (14) to determine and, in particular, compensate for ageing of the permanent magnet (14.1) of the vibration sensor,
and/or
to determine and, in particular, compensate for ageing of the permanent magnet (13.1) of the vibration exciter by means of the amplitude sensor (15) and at least one vibration exciter (13).

8. Coriolis measuring device according to claim 7,
wherein the electronic measuring/operating circuit (77) is configured to determine the vibration amplitude of the measuring tube (11) by means of the measuring current and the measuring voltage.

9. Coriolis measuring device according to claim 7 or 8,
wherein the electronic measuring/operating circuit (77) is configured to compensate for the ageing of the permanent magnet (14.1) of the vibration sensor by means of at least the following measured variables:
measured oscillation amplitude of the measuring tube during calibration;
induced voltage in the sensor coil during calibration;
measured vibration amplitude of the measuring tube at a current point in time; induced voltage in the sensor coil at a current point in time;
and/or where
the electronic measuring/operating circuit (77) is configured to compensate for the ageing of the permanent magnet (13.1) of the vibration exciter (13) by means of at least the following measured variables:
measured oscillation amplitude of the measuring tube (11) during calibration;
induced voltage in the excitation coil during calibration;
measured oscillation amplitude of the measuring tube at a current point in time; induced voltage in the excitation coil at a current point in time.

10. Method for compensating for ageing of a vibration exciter/vibration sensor of a Coriolis measuring device according to one of claims 7 to 9,
wherein at least one amplitude sensor determines an oscillation amplitude of at least one measuring tube, wherein the amplitude sensor has a first coil (15.1) and a second coil (15.2), which are magnetically coupled and in particular aligned coaxially to one another, wherein the coils are configured to be moved relative to one another, in particular along their coil axes (15.3), by measuring tube oscillations,
wherein the first coil is configured to be subjected to a measuring current, in particular a direct current, and to generate a magnetic field, wherein the second coil is configured to detect the magnetic field and to generate an induced measuring voltage,
wherein the method comprises the following steps:
measurement of the oscillation amplitude of the measuring tube during calibration using an amplitude sensor by means of the measuring current and the measuring voltage;
measurement of an induced voltage in an excitation coil / sensor coil during calibration;
measuring the vibration amplitude of the measuring tube at a current point in time using the amplitude sensor by means of the measuring current and the measuring voltage;
measurement of an induced voltage in an excitation coil / sensor coil at a current point in time;
determining an ageing state of a permanent magnet of a vibration exciter/vibration sensor at least by means of the measured variables recorded during the previous method steps.

## Revendications

1. Capteur de mesure à effet Coriolis (10) d'un appareil de mesure à effet Coriolis (1) pour mesurer une densité ou un débit massique d'un fluide s'écoulant à travers une conduite, comprenant :
au moins un tube de mesure (11) pour guider le fluide ;
un corps de support (12) pour porter le au moins un tube de mesure ;
au moins un générateur de vibrations (13) pour générer des vibrations du tube de mesure ; au moins deux capteurs de vibrations (14) pour détecter les vibrations du tube de mesure,
les capteurs de vibrations présentant chacun au moins un aimant permanent (14.1) et chacun au moins une bobine de capteur (14.2),
et où l'excitateur de vibrations présente respectivement au moins un aimant permanent (13.1) et respectivement au moins une bobine d'excitation (13.2)
où
le capteur de mesure de Coriolis présente au moins un capteur d'amplitude (15) aménagé pour détecter une amplitude d'oscillation des oscillations du tube de mesure,
**caractérisé en ce que** le capteur d'amplitude présente une première bobine (15.1) et une deuxième bobine (15.2) qui sont couplées magnétiquement et en particulier orientées coaxialement l'une par rapport à l'autre,
les bobines étant agencées pour être déplacées les unes par rapport aux autres par des oscillations du tube de mesure, en particulier le long de leurs axes de bobine (15.3),
la première bobine étant conçue pour être alimentée par un courant de mesure, en particulier un courant continu, et pour générer un champ magnétique,
dans lequel la deuxième bobine est adaptée pour détecter le champ magnétique et pour générer une tension de mesure induite.

2. Capteur de mesure de Coriolis selon la revendication 1,
dans lequel la première bobine (15.1) a une position fixe par rapport au corps de support (12), et dans lequel la deuxième bobine (15.2) est adaptée pour suivre le mouvement d'oscillation du tube de mesure (11).

3. Capteur de mesure de Coriolis selon la revendication 1 ou 2,
dans lequel le capteur d'amplitude (15) est conçu pour détecter l'amplitude de vibration du tube de mesure dans une zone d'amplitude maximale.

4. Capteur de mesure à effet Coriolis selon l'une des revendications précédentes,
la première bobine (15.1) étantune bobine de Helmholtz, la deuxième bobine (15.2) étant en particulier adaptée pour être déplacée au moins partiellement dans la première bobine par les oscillations du tube de mesure.

5. Capteur de mesure à effet Coriolis selon l'une des revendications précédentes,
une amplitude d'oscillation du tube de mesure (11) pouvant être calculée au moyen du courant de mesure ainsi que de la tension de mesure induite.

6. Capteur de mesure Coriolis selon l'une des revendications précédentes,
dans lequel le capteur de mesure de Coriolis comprend au moins une paire de tubes de mesure, les tubes de mesure de la paire de tubes de mesure étant adaptés pour vibrer les uns par rapport aux autres,
l'excitateur de vibrations (13) présentant deux bobines d'excitation (13.2), lesquelles bobines d'excitation sont disposées chacune sur un tube de mesure de la paire de tubes de mesure, l'aimant permanent de l'excitateur de vibrations étant disposé sur un tube de mesure,
et/ou où
les capteurs de vibrations (14) présentant chacun deux bobines de capteur (14.2), lesquelles bobines de capteur sont disposées chacune sur un tube de mesure de la paire de tubes de mesure, l'aimant permanent du générateur de vibrations étant disposé sur un tube de mesure,
les bobines d'excitation et/ou les bobines de détection d'un capteur de vibrations respectif formant respectivement une première bobine (15.1) et une deuxième bobine (15.2) du capteur d'amplitude.

7. Appareil de mesure à effet Coriolis (1) pour mesurer une densité ou un débit massique d'un fluide s'écoulant dans une conduite, comprenant :
un capteur de mesure de Coriolis (10) selon l'une des revendications précédentes,
un circuit électronique de mesure/fonctionnement (77) agencé pour faire fonctionner le générateur de vibrations (13) et le capteur d'amplitude (15) et agencé pour fournir des valeurs de mesure de la densité et/ou du débit massique sur la base des vibrations du tube de mesure détectées par les capteurs de vibrations,
un boîtier électronique (80) dans lequel est disposé le circuit électronique de mesure/de fonctionnement,
**caractérisé en ce que**
le circuit électronique de mesure/d'exploitation est agencé pour mesurer, au moyen du capteur d'amplitude (15) et d'au moins un capteur de vibrations (14) pour déterminer et notamment compenser un vieillissement de l'aimant permanent (14.1) du capteur de vibrations,
et/ou
déterminer, au moyen du capteur d'amplitude (15) et d'au moins un générateur d'oscillations (13), un vieillissement de l'aimant permanent (13.1) du générateur d'oscillations et en particulier à le compenser.

8. Appareil de mesure à effet Coriolis selon la revendication 7,
dans lequel le circuit électronique de mesure/fonctionnement (77) est conçu pour déterminer l'amplitude de vibration du tube de mesure (11) au moyen du courant de mesure et de la tension de mesure.

9. Appareil de mesure à effet Coriolis selon la revendication 7 ou 8,
dans lequel le circuit électronique de mesure/fonctionnement (77) est conçu pour compenser le vieillissement de l'aimant permanent (14.1) du capteur de vibrations au moyen d'au moins les grandeurs de mesure suivantes :
amplitude mesurée des vibrations du tube de mesure lors de l'étalonnage ;
tension induite dans la bobine du capteur lors de l'étalonnage ;
amplitude de vibration mesurée du tube de mesure à un moment donné ; tension induite
dans la bobine du capteur à un moment donné ;
et/ou où
le circuit électronique de mesure/fonctionnement (77) est conçu pour compenser le vieillissement de l'aimant permanent (13.1) du générateur de vibrations (13) au moyen d'au moins les grandeurs de mesure suivantes :
amplitude d'oscillation mesurée du tube de mesure (11) lors de l'étalonnage ;
tension induite dans la bobine d'excitation lors de l'étalonnage ;
amplitude de vibration mesurée du tube de mesure à un moment donné ; tension induite
dans la bobine d'excitation à un moment donné.

10. Procédé de compensation du vieillissement d'un excitateur de vibrations / capteur de vibrations d'un appareil de mesure à effet Coriolis selon l'une des revendications 7 à 9,
dans lequel au moins un capteur d'amplitude détermine une amplitude d'oscillation d'au moins un tube de mesure, le capteur d'amplitude présentant une première bobine (15.1) et une deuxième bobine (15.2) qui sont couplées magnétiquement et orientées en particulier coaxialement l'une par rapport à l'autre, les bobines étant conçues pour être déplacées l'une par rapport à l'autre par des oscillations du tube de mesure, en particulier le long de leurs axes de bobine (15.3),
la première bobine étant conçue pour être alimentée par un courant de mesure, en particulier un courant continu, et pour générer un champ magnétique, la deuxième bobine étant conçue pour détecter le champ magnétique et pour générer une tension de mesure induite,
le procédé comprenant les étapes suivantes :
mesure de l'amplitude des vibrations du tube de mesure lors de l'étalonnage au moyen d'un capteur d'amplitude au moyen du courant et de la tension de mesure ;
mesure d'une tension induite dans une bobine d'excitation / de détection lors de l'étalonnage ;
mesure de l'amplitude des vibrations du tube de mesure à un moment donné au moyen du capteur d'amplitude au moyen du courant de mesure et de la tension de mesure ;
mesure d'une tension induite dans une bobine d'excitation / de détection à un moment donné ;
déterminer un état de vieillissement d'un aimant permanent d'un générateur de vibrations / capteur de vibrations au moins au moyen des grandeurs de mesure détectées pendant les étapes de procédé précédentes.
